# EUROPEAN PATENT APPLICATION

(11) **EP 3 556 954 A1**
(43) Date of publication of application: **23.10.2019**
(21) Application number: 19169976.8
(22) Date of filing: 17.04.2019
(51) Int. Cl.: E04B 1/348, H02B 3/00

(54) **PREFABRICATED UTILITY STATION**

(30) Priority: 18.04.2018 GB 201806324
(71) Applicant: Dutypoint Limited, Gloucester, Gloucestershire GL2 5EL (GB)
(72) Inventor: Freeman, Robert, Gloucester, Gloucestershire GL2 5EL (GB)
(74) Representative: Games, Robert Harland

(57) **Abstract**

A prefabricated utility station (10) comprises: an outer casing (12) having a first side (14), a second side (16) parallel to and spaced from the first side (14), both sides being planar, and a back side (18) perpendicular to the first (14) and second (16) sides and joined to each of the first (14) and second (16) sides; a substantially concave inner wall (20) disposed within the outer casing (12) and joined to a front edge of each of the first (16) and second sides (18); at least one utility unit (46); at least one lifting member (30) rigidly connected to the inner wall (20); and at least one conduit (48) connected to the utility unit (46) for supplying the utility unit (48) with a utility, in which the utility unit (46) is mounted to the inner wall (20), and the conduit (48) extends from the utility unit (46) to the space between the inner wall (20) and the outer casing (12), for connection to a utility outlet of a building.

## Description

The present invention relates to a prefabricated utility station.

### BACKGROUND TO THE INVENTION

In residential construction projects, it is necessary to install utilities such as heating, ventilation and electrical power. This requires installation of a number of utility units such as a water heating unit, a distribution board for the electricity supply, a mechanical ventilation unit, and sometimes appliances such as washing machines or tumble driers. The units and appliances must be connected to utilities conduits such as electrical power cables, ventilation ducts, gas supply and water flow and return pipes.

In larger projects such as apartment buildings, it may be necessary to repeat a number of identical installations. It has been found that significant cost and time savings can be obtained by providing prefabricated utilities panels, incorporating some or all of the above units, appliances and connections fixed to a frame or board. This allows a significant amount of standardised work to be performed off-site, simplifying the overall construction process.

Such panels are typically installed in a dedicated utilities cupboard or room, separated from living spaces by a door. This is because the necessary connectors and conduits are generally considered unsightly and undesirable in a domestic environment.

A problem with this approach is that the dedicated cupboard or room cannot generally be used for any other purpose. It may be possible to use the space for storage, for example of ironing boards or vacuum cleaners, but this can limit access to the utilities units and be inconvenient.

This problem is particularly acute in urban residential developments, where the available space is often severely limited.

A further problem of prior art utilities panels is that they are typically large compared to the size of a door, making them difficult to manoeuvre and install. The difficultly in manoeuvring and installing also increase the risk of injury to installers.

It is an object of the invention to provide a prefabricated utilities solution which simplifies construction and installation while maximising usable living space.

### STATEMENT OF INVENTION

According to a first aspect of the present invention, there is provided a prefabricated utility station comprising:
a substantially U-shaped outer casing having a first side, a second side spaced from the first side, and a back side perpendicular to the first and second sides and joined to each of the first and second sides;
a substantially U-shaped inner wall disposed within the outer casing and joined to a front edge of each of the first and second sides;
at least one utility unit;
at least one lifting member rigidly connected to the inner wall; and
at least one conduit connected to the utility unit for supplying the utility unit with a utility, in which the utility unit is mounted to a rear side of the inner wall, disposed between the inner wall and the outer casing, and the conduit extends from the utility unit to the outer casing, for connection to a utility outlet of a building.

The prefabricated utility station provides a unit that can be inserted into an appropriately sized void to provide a finished utility area that is suitable for a domestic environment. The prefabricated utility station can be regarded as a pre-packaged utility room. The inner wall provides a visible face to face the interior of a room. The outer casing abuts the walls of the void and provides structural integrity. The space defined between the inner wall and the outer casing houses the necessary connectors, pipes and cables, referred to generally as conduits. The conduits are hidden from view by the inner wall so that the prefabricated utility station presents an acceptable aspect for a domestic space. The concavity of the inner wall provides additional working or living space. Utility units, such as a water heater, are mounted to the inner wall. This allows them to be accessible from the domestic space, while the required conduits are hidden from view behind the inner wall. The lifting member provides a suitable engagement point for lifting equipment, improving the manoeuvrability and simplifying the process of fitting the utility station.

The lifting member may extend at least partially along the inner wall. The at least one lifting member may extend substantially along the inner wall. By having the lifting member extending along a portion of the inner wall it increases the area of contact with the lifting device.

The utility station may be provided with a plurality of lifting members rigidly connected to an inner side of the inner wall.

The or each lifting member may be a bracket. The or each lifting member may be a bar.

The or each lifting member may have an upper surface for supporting a worktop and a lower surface for engaging a lifting trolley.

At least some of the lifting members may be suitable for use with a hoisting device.

The lifting members suitable for use with a hoisting device may be located in an upper region of the inner wall. Alternatively, they may be located in the same plane as other lifting members.

The lifting members suitable for use with a hoisting device may include an aperture or other means of connecting the hoisting device.

The lifting members fulfil a dual purpose of supporting a worktop and providing a plurality of engagement points for a lifting trolley. By having a single large area of engagement or a plurality of engagement points the stability during installation of the prefabricated utility station is improved as it can be supported at a median point, i.e., without requiring a support to be inserted below the prefabricated utility station. Additionally, the lifting member(s) provides an unobtrusive point of support which can be hidden below the worktop. It will be understood that the worktop may be provided as a separate component to be added after installation of the prefabricated utility station.

The prefabricated utility station may further comprise a worktop disposed on the upper surfaces of the lifting members.

Each of the plurality of lifting members may be situated in the same plane. This allows a planar worktop to be supported by the lifting members. It also allows a planar support element of a lifting trolley to be used to install the prefabricated utility station. All of the lifting members may contact the planar support element simultaneously, resulting in a more even and stable weight distribution. Alternatively, the lifting member(s) may have a larger area of contact with the planar support element.

The prefabricated utility station may further comprise a movable concealment element for concealing the utility unit from view.

This allows utility units which require access, for example electrical distribution boards, to be accommodated without reducing the aesthetic appeal of the prefabricated utility station.

The outer casing may comprise an aperture for receiving a utility outlet of a building.

This allows the utility unit to be provided with a necessary utility, for example electrical power to a distribution board or water and gas to a water heater. The conduit may be connected to the utility outlet through the aperture.

The utility conduit may extend from the utility unit to the vicinity of the aperture.

The utility unit may be a water boiler or heat interface unit.

The utility unit may be a distribution board.

The utility unit may be a mechanical ventilation and heat recovery (MVHR) unit.

The utility conduit may be one of: a water pipe; an electrical cable; a gas fuel pipe; a ventilation duct for use with an MVHR unit.

A plurality of utility units may be provided.

A plurality of utility conduits may be provided.

The or each utility conduit may be, in use, concealed from view by the inner wall.

The outer casing may be removable, in whole or in part, to fit, in use, within an alcove of a permanent structure such as a building. The removal may be prior to fitting the utility station within the alcove. The alcove may be U-shaped. The outer casing may be removed, in part, to fit, in use, in a corner position of a permanent structure such as a building. The corner may be L-shaped.

A lifting trolley may be provided for use with the prefabricated utility station. The lifting trolley provided for use with the utility station may comprise a chassis; a plurality of wheels rotatably mounted on the chassis; and an engagement plate, the engagement plate having a front edge shaped to conform to the inner profile of the utility station for engaging the or each lifting member of the utility station, in which the lifting plate is movable relative to the chassis between a lowered position for moving the trolley under the or each lifting member of the prefabricated utility station, and a raised position for supporting the prefabricated utility station clear of the floor via the or each lifting member.

According to a second aspect of the invention, there is provided a lifting trolley for moving a prefabricated utility station comprising: a chassis; a plurality of wheels rotatably mounted on the chassis; and an engagement plate, the engagement plate having a front edge shaped to conform to an inner profile of the utility station for engaging at least one lifting member of the utility station, in which the lifting plate is movable relative to the chassis between a lowered position for moving the trolley under the or each lifting member of a prefabricated utility station, and a raised position for supporting the prefabricated utility station clear of the floor via the or each lifting member.

The lifting trolley may be used to move or install the prefabricated utility station. The prefabricated utility station is likely to be large and heavy.

The engagement plate may be movable relative to the wheels between a lowered position for moving the trolley under at least one lifting member of a prefabricated utility station, and a raised position for supporting the prefabricated utility station clear of the floor via the or each lifting member.

This allows the lifting trolley to fit beneath the or each lifting member in the lowered position, so that the lifting trolley can be rolled into position below the or each lifting member while the prefabricated utility station is resting on the ground.

According to a third aspect of the invention, there is provided a method of installing a prefabricated utility station according to the first aspect of the invention and in which at least one lifting member is disposed on and joined to an inner side of the inner wall, the or each lifting member having an upper surface for supporting a worktop and a lower surface for engaging a lifting trolley. The method comprises the steps of: inserting a lifting trolley below the at least one lifting member, the lifting trolley comprising a chassis; a plurality of wheels rotatably mounted on the chassis and an engagement plate, the engagement plate having a front edge shaped to conform to an inner profile of the utility station for engaging the or each lifting member; causing the engagement plate of the trolley to move from a lowered position in which the engagement plate is clear of the or each lifting member to a raised position in which the engagement plate engages the or each lifting member and supports the prefabricated utility station clear of the floor via the or each lifting member.

Installation of the prefabricated utility station is difficult because of its height. The utility station is typically almost floor to ceiling height in the finished building. This means it is difficult to fit a lifting means such as a forklift truck beneath the utility station, and there is not space to lift the utility station from above. The utility station will typically be inserted into a three-sided substantially U-shaped void. It is desirable to obtain a relatively tight fit between the utility station and the walls of the void, i.e., there should not be much clearance between the outer casing of the utility station and the walls of the building. It is therefore not possible to grip the utility station from the outside while manoeuvring it into the void.

The lifting trolley and method of installing a utility station using the lifting trolley address these problems. The engagement plate of the lifting trolley may be inserted within the inner wall of the utility station, and its front edge is shaped to conform to an inner profile of the inner wall. This allows for the at least one lifting member to provide a large area of contact, either through a single lifting member or a plurality of lifting members. The plurality of lifting members can be beneficial as they may be provided at different points on the inner wall to engage the engagement plate at multiple points of contact, distributed throughout the utility station. The utility station may thus be lifted clear of the floor and moved from within.

In another aspect of the present invention there is provided a prefabricated utility station installation system, the system comprises the prefabricated utility station according to the first aspect of the present invention and a lifting trolley according to the second aspect of the present invention.

### BRIEF DESCRIPTION OF THE DRAWINGS

For a better understanding of the present invention, and to show more clearly how it may be carried into effect, reference will now be made by way of example only to the accompanying drawings, in which:
Figure 1 shows a schematic view from above of a prefabricated utility station without a ceiling member or worktop for clarity;
Figure 2 shows a schematic view from the front of the prefabricated utility station of Figure 1; and
Figure 3 shows a perspective view of a lifting trolley for moving a prefabricated utility station

### DESCRIPTION OF PREFERRED EMBODIMENTS

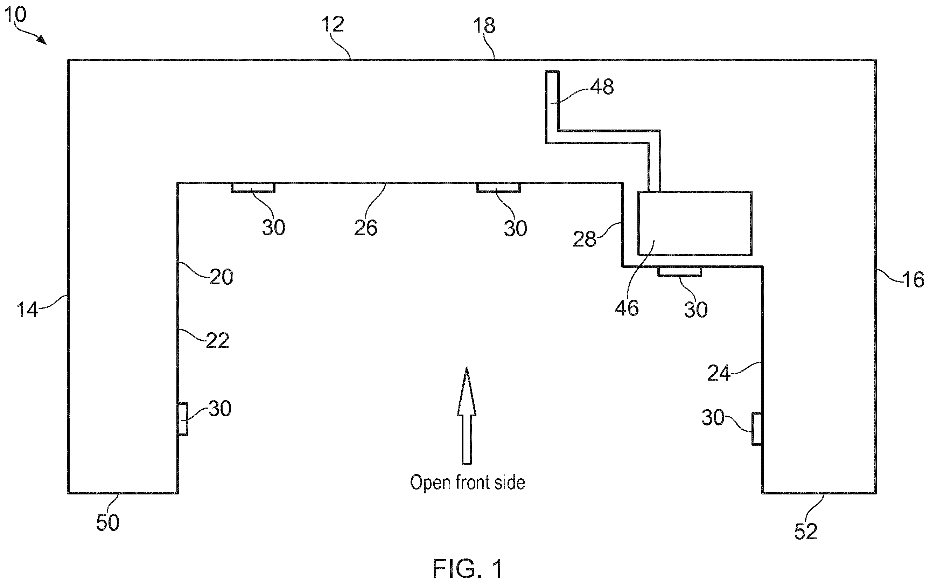

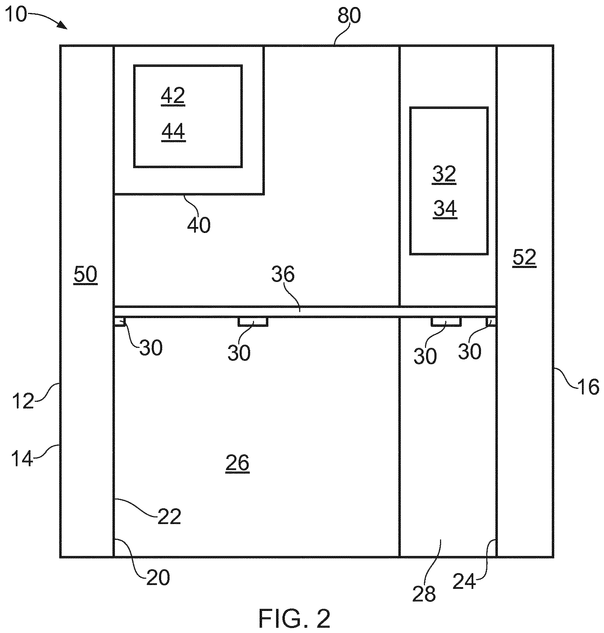

Referring firstly to Figures 1 and 2, a prefabricated utility station is indicated generally at 10.

The prefabricated utility station 10 includes an outer casing 12. The outer casing 12 is substantially U-shaped when viewed from above. The outer casing 12 includes a first side 14, a second side 16 and a back side 18, joined together to form the U-shape.

The first side 14 and the second side 16 are substantially planar. The first and second sides 14, 16 may include apertures or depressions, but must not include significant protrusions which would prevent inserting the utility station 10 into a void with a tight fit.

The first side 14 and the second side 16 are parallel.

Each of the first side 14 and the second side 16 is has an inverted L shape. That is, each side 14, 16 is shaped as a rectangle from which has been removed a rectangular cutaway section at the corner. The cutaway is situated at a lower rear corner of each of the first side 14 and second side 16 to provide for a cavity at the rear of the utility station enabling connection of utilities.

The back side 18 is perpendicular to the first side 14 and the second side 16. The back side 18 is joined to a rear edge of each of the first side 14 and the second side 16. The back side 18 is substantially rectangular.

It will be understood that the first side 14, second side 16 and back side 18 may be provided as separate panels or may be provided as a single continuous sheet of material.

The prefabricated utility station 10 includes an inner wall 20. The inner wall 20 is substantially U-shaped when viewed from above, similar to the outer casing 12.

The inner wall 20 is the same height as the outer casing 12. The profile of the inner wall 20 is smaller than that of the outer casing 12 to allow the inner wall 20 to sit within the outer casing 12.

The inner wall 20 is disposed concentrically within the outer casing 12. In other embodiments, the inner wall 20 may be disposed eccentrically within the outer casing 12. The inner wall 20 is orientated so that its open front coincides with the open front of the outer casing 12. That is, the front edges of the inner wall 20 and the front edges of the outer casing 12 are situated within the same plane.

A cavity is defined between the inner wall 20 and the outer casing 12.

The phrase 'inner side' of the inner wall will be employed to denote the side of the inner wall facing the inside of this C shaped profile.

The inner wall 20 includes a first side section 22, a second side section 24 and a back section 26. These sections are joined to form a U-shape.

The inner wall also includes a cupboard section 28. The cupboard section 28 is an exception to the generally U-shaped profile of the inner wall 20, being a right-angled protrusion situated in a corner of the U-shaped profile.

The first side section 22, second side section 24 and back section 26 are each planar and substantially rectangular. The cupboard section 28 has a right-angle profile. The first side section 22 and second side section 24 are parallel.

The first side section 22, second side section 24 and back section 26 are each the same height as the outer casing 12.

Each of the first side section 22 and the second side section 24 has a rear edge and a front edge.

The first side section 22 is joined at its rear edge to the back section 26. The back section 26 is joined to the cupboard section 28. The cupboard section 28 is joined to the rear edge of the second side section 24.

The front edges of the first side section 22 and second side section 24 define an opening.

A first front panel 50 and a second front panel 52 are provided. Each front panel 50, 52 is an elongate rectangular panel. The first front panel 50 is joined to the front edge of the first side section 22 and to a front edge of the first side 14 of the outer casing 12. The second front panel 52 is joined to the front edge of the second side section 24 and to a front edge of the second side 16 of the outer casing 12.

The inner wall 20 and outer casing 12 are each made of a thin, strong material such as steel, which may be folded or pressed to shape.

In the current embodiment, a plurality of brackets 30 is disposed on the inner side of the inner wall 20. The brackets 30 each sit within a plane, the plane being perpendicular to the inner wall 20. In other embodiments, at least one lifting point or bracket is disposed on the inner side of the inner wall 20.

Each bracket 30 is made by laser cutting two vertical parallel cuts and a horizontal cut at the upper extent of the vertical parallel cuts to form an inverted U-shape cut in the inner wall or structural member within the inner wall. Material inside the cuts is then folded so that the substantially horizontal platform forms the bracket. The horizontal fold line is at the lower extend of the two vertical parallel cuts and is substantially parallel to the horizontal cut.

Each bracket 30 includes an elongate shelf protruding from the inner wall 20. Each shelf has an upper surface and a lower surface. Each shelf includes a plurality of circular apertures for receiving screws or other fixings.

In this embodiment, two brackets 30 are provided on each of the first side section 22 of the inner wall 20 and the second side section 24 of the inner wall 20.

A worktop 36 is provided. The worktop 36 is a planar member having an outline shaped to conform to the profile of the inner wall 20. The worktop 36 is supported on the brackets 30. In this embodiment, the worktop 36 is substantially L-shaped. The crook of the L receives the cupboard section 28 of the inner wall 20.

The cupboard section 28 includes a window 32. The window 32 is substantially rectangular in shape. The window 32 is disposed above the plane of the brackets 30.

A door 34 is provided over the window 32. The door 34 is hinged to the cupboard section 28 of the inner wall 20.

A plurality of 3-pin power sockets 38 is provided on the inner wall 20.

An additional cupboard unit 40 is provided. The additional cupboard unit 40 is an oblong body disposed in an upper corner of the inner wall 20. The additional cupboard unit 40 includes a window 42. The window 42 is closed by a door 44. The door 44 is hinged to the additional cupboard unit 40. In other embodiments, the window and door may be omitted.

A utility unit 46 is mounted within the additional cupboard unit 40. In this embodiment, the utility unit 46 is a ventilation and heat recovery unit. The utility unit 46 is accessible via the window 42 when the door 44 is open. When closed, the door 44 hides the utility unit 46 from view.

The utility unit 46 is connected to a conduit 48. The conduit 48 passes from the utility unit 46 through an aperture in the inner wall 20 into the space between the inner wall 20 and the outer casing 12.

It will be understood that, although in this embodiment, the additional cupboard unit 40 is provided by separate panels disposed in front of the inner wall 20, the additional cupboard unit may be provided as a protrusion of the inner wall 20. In this case, the utility unit 46 may be mounted behind the inner wall 20 and no aperture in the inner wall will be required for this particular utility unit.

A ceiling member 80 is provided. The ceiling member 80 is a planar member joined at its edges to upper edges of the inner wall 20.

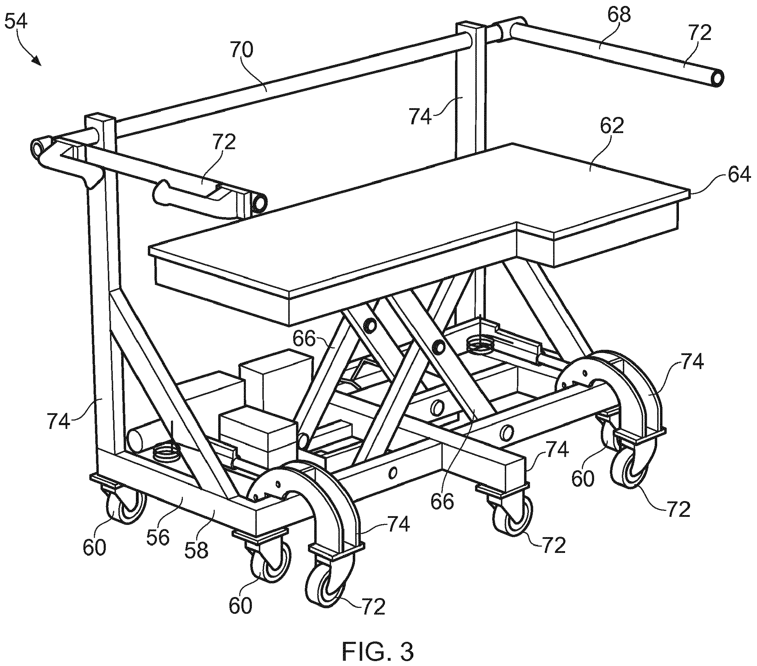

Referring now to Figure 3, a lifting trolley for installing a prefabricated utility station is indicated generally at 54.

The lifting trolley 54 includes a rectangular chassis 58.

Five casters 60 are provided. Four of the casters 60 are attached to respective corners of the chassis 58. The remaining caster 60 is positioned in a free zone in front of the front edge of the chassis 58. This is where the majority of the weight is borne, and prevents the trolley 54 from tipping over forwards under the weight of the utility station 10 in use.

The lifting trolley 54 includes an engagement plate 62. The engagement plate 62 has a planar upper surface having a front edge 64. The front edge 64 of the engagement plate 62 has the same shape as the profile of the inner wall 20. That is, the engagement plate is sized and shaped to abut the first side section 22, second side section 24, back section 26 and cupboard section 28 simultaneously. The engagement plate has the same shape and dimensions as the worktop 36.

A right handed and a left handed utility station 10 may be provided, being mirror images of each other. The engagement plate can be turned upside down to engage these different versions of the utility station 10.

A scissor lift mechanism 66 is provided. The scissor lift mechanism 66 is powered by actuators. The scissor lift mechanism 66 is attached to the chassis 58. The engagement plate 62 is attached to the top of the scissor lift mechanism 66. The scissor lift mechanism 66 is adapted to raise or lower the engagement plate 62 relative to the chassis 58.

A handrail 68 is provided. The handrail 68 includes a joining section 70 and two projecting sections 72. Each section 70, 72 is a steel tube. A first end of each projecting section 72 is joined to the joining section 70. The second end of each projecting section 72 is free. The projecting sections 72 are parallel. The projecting sections 72 are perpendicular to the joining section 70.

The handrail 68 is supported above the chassis 58 by a pair of stanchions 74. Each stanchion 74 is welded to a corner of the chassis 5 8. The corners to which the stanchions 74 are welded are adjacent and at the rear of the chassis (that is, the opposite side to the front edge 64 of the engagement plate 62). The joining section 70 is connected to both of the stanchions 74.

The lifting trolley 54 also includes a lowerable powered wheel. The powered wheel has a retracted position, in which it is substantially clear of the floor, and a lowered position, in which it engages the floor. An electric motor is provided to power the wheel.

Two additional casters 73 are provided. Each additional caster 73 is on an arm 74 projecting from a front edge of the chassis 58.

A method of using the lifting trolley 54 to install a utility station 10 will now be described.

The lifting trolley 54 is positioned within the concave inner wall 20. The lifting trolley 54 is positioned so that the edge 64 of the engagement plate 62 abuts the inner wall 20. The engagement plate 62 is in a lowered position.

The scissor lift 66 is activated to raise the engagement plate 62. The engagement plate 62 engages the brackets 30 and lifts the utility station 10.

The powered wheel is then lowered to engage the floor. The utility station 10 can now be moved by pushing on the handrail 68, with the assistance of the powered wheel. The combined width of the trolley and utility station is less than the width of a standard internal door (around 762 mm or 30 inches).

When the utility station 10 is in position, for example in a void in a building under construction, the scissor lift 66 is used to lower the utility station 10 to the floor. The engagement plate 62 is lowered clear of the brackets and the trolley 54 is moved out of the utility station 10.

These embodiments are provided by way of example only, and various changes and modifications will be apparent to persons skilled in the art without departing from the scope of the present invention as defined by the appended claims.

## Claims

1. A prefabricated utility station (10) comprising:
a substantially U-shaped outer casing (12) having a first side (14), a second side (16) spaced from the first side (14), and a back side (18) perpendicular to the first (14) and second (16) sides and joined to each of the first (14) and second (16) sides;
a substantially U-shaped inner wall (20) disposed within the outer casing (12) and joined to a front edge of each of the first (14) and second (16) sides;
at least one utility unit (46);
at least one lifting member (30) rigidly connected to the inner wall (20); and
at least one conduit (48) connected to the utility unit (46) for supplying the utility unit (46) with a utility,
in which the utility unit is mounted to a rear side of the inner wall (20), disposed between the inner wall (20) and the outer casing (12), and the conduit (48) extends from the utility unit (46) to the outer casing (12), for connection to a utility outlet of a building.

2. A prefabricated utility station (10) as claimed in claim 1, in which there are a plurality of lifting members (30) rigidly connected to an inner side of the inner wall (20), each lifting member having an upper surface for supporting a worktop (36) and a lower surface for engaging a lifting trolley (54).

3. A prefabricated utility station (10) as claimed in claim 2, further comprising a worktop (36) disposed on the upper surfaces of the lifting members (30).

4. A prefabricated utility station (10) as claimed in claim 2 or claim 3, in which the or each of the lifting members (30) is situated in the same plane.

5. A prefabricated utility station (10) as claimed in any preceding claim, further comprising a movable concealment element for concealing the utility unit from view.

6. A prefabricated utility station (10) as claimed in any preceding claim, in which the outer casing (12) comprises an aperture for receiving a utility outlet of a building.

7. A prefabricated utility station (10) as claimed in claim 7, in which the utility conduit (48) extends from the utility unit (46) to the vicinity of the aperture.

8. A prefabricated utility station (10) as claimed in any preceding claim, in which the utility unit (46) is a water heater.

9. A prefabricated utility station (10) as claimed in any preceding claim, in which the utility unit (46) is a distribution board.

10. A prefabricated utility station (10) as claimed in any preceding claim, in which the utility unit (46) is an MVHR unit.

11. A prefabricated utility station (10) as claimed in any preceding claim, in which the utility conduit (48) is one of: a water pipe; an electrical cable; a gas fuel pipe; a ventilation duct for use with an MVHR unit.

12. A prefabricated utility station as claimed in any preceding claim, in which the outer casing (12) is removable, in whole or in part, in use to fit within an alcove.

13. A prefabricated utility station (10) as claimed in any preceding claim, in which a plurality of utility conduits (48) is provided and, in use, concealed from view by the inner wall (20).

14. A movable lifting trolley (54) used with a prefabricated utility station (10) as claimed in any of the preceding claims, the lifting trolley (54) comprising:
a chassis (58);
a plurality of wheels (60) rotatably mounted on the chassis (58); and
an engagement plate (62), the engagement plate (62) having a front edge (64) shaped to conform to the inner profile of the utility station (10) for engaging the or each lifting member (30) of the utility station (10),
in which the engagement plate (62) is movable relative to the chassis (58) between a lowered position for moving the trolley under the or each lifting member (30) of the prefabricated utility station (10), and a raised position for supporting the prefabricated utility station (10) clear of the floor via the or each lifting member (30).

15. A method of installing a prefabricated utility station (10) as claimed in any preceding claim dependent on claim 1, comprising the steps of:
inserting a lifting trolley (54) below the at least one lifting member (30), the lifting trolley (54) comprising a chassis (58); a plurality of wheels (60) rotatably mounted on the chassis (58) and an engagement plate (62), the engagement plate (62) having a front edge (64) shaped to conform to an inner profile of the utility station (10) for engaging the at least one lifting member (30);
causing the engagement plate (62) of the trolley (54) to move from a lowered position in which the engagement plate (62) is clear of the at least one lifting member (30) to a raised position in which the engagement plate (62) engages the at least one lifting member (30) and supports the prefabricated utility station (10) clear of the floor via the at least one lifting member (30).
